# EUROPEAN PATENT APPLICATION

(11) **EP 4 296 725 A1**
(43) Date of publication of application: **27.12.2023**
(21) Application number: 22180217.6
(22) Date of filing: 21.06.2022
(51) Int. Cl.: G02B 1/04, G02F 1/133

(54) **FOAM DIFFUSER PLATE AND A MANUFACTURING METHOD THEREOF**

(71) Applicant: Regency Optics-Electron Corp., Huizhou City Guangdong Province (CN)
(72) Inventor: CHENG, JIH HSIN, Huizhou City (CN); WANG, XING LI, Huizhou City (CN); LIANG, MAN YI, Huizhou City (CN); HE, XIAO LEI, Huizhou City (CN)
(74) Representative: Cabinet Chaillot

(57) **Abstract**

The present invention provides a foam diffuser plate, including a foam core layer (10), the upper surface and the lower surface of the foam core layer (10) are covered with a protective layer (20), and the thickness ratio of the foam core layer (10) to the upper and lower surfaces of the protective layer (20) is 1:7-9:1. The mass percentage of each raw material of the protective layer (20) is PS raw material 90-99%, stabilizer 0.01-1%, organosilicon 0.1-3%, inorganic diffusing agent 0.1-3%, diffusing oil 0.1-3%, styrene-butadiene copolymer 0.1-2%, and magnesium silicate mineral 0.1-6%. The mass percentage of each raw material of the foam core layer (10) is GPPS raw material 95-99%, antioxidant 0.3-0.6%, silicone diffusing agent 0.6-1%, foaming agent 0.5-2%, anti-UV agent 0.3-0.6%, toughening agent 0.5-2%, stabilizer 0.3-0.6%, and nucleating agent 1-5%. A manufacturing method of the foam diffuser plate is provided in the present invention as well.

## Description

### BACKGROUND

### Technical Field

The invention relates to the field of light diffuser plates, in particular a foam diffuser plate and manufacturing method thereof.

### Description of Related Art

The light diffuser plate is a material conducting through physical phenomenon of refraction, reflection and scattering that occurs when the light travels through two media with different refractive indices by chemical or physical means. By adding inorganic or organic light diffusing agents to the base of PMMA (Poly Methyl Methacrylate), PC (Polycarbonate), PS (Polystyrene), PP (Polypropylene) and other substrates materials, or by artificially adjusting the light through the array arrangement of micro-features on the surface of the substrate, the light can be refracted, reflected, and scattered in different directions, thereby changing the direction of light. Under above application, sufficient dispersion of incident light is achieved so as to produce the effect of optical diffusion. Thereby, light diffuser plate is widely applied to liquid crystal display, LED lighting and imaging display devices.

In the conventional display screen, one or both surfaces of the diffuser plate are processed with concave and convex dots or concave stripes, to improve the light dispersion performance of the diffusion plate, so that the LED light source of the LED stripe could be uniform distributed after travels through the diffuser plate. However, with the continuous upgrade of the display screen, the structure of the existing light diffuser plate can no longer meet the needs of manufacturers, since the conventional diffuser plates are generally heavy in weight, and have low diffusion due to poor refractive index.

### SUMMARY

In some embodiments, the present invention provides a foam diffuser plate and a manufacturing method thereof, which have better total light reflection performance, better uniformity, less irregularity or blemish and thus reduce Mura effects.

In view of above, one embodiment of the foam diffuser plate and the manufacturing method thereof disclosed in the present invention is provided below:
a foam diffuser plate, comprising a foam core layer, the upper surface and the lower surface of the foam core layer are covered with a protective layer, and the thickness ratio of the foam core layer to the upper and lower surfaces of the protective layer is 1:7-9:1, the mass percentage of each raw material of the protective layer is PS raw material 90-99%, stabilizer 0.01-1%, organosilicon 0.1-3%, inorganic diffusing agent 0.1-3%, diffusing oil 0.1-3%, styrene-butadiene copolymer 0.1-2%, and magnesium silicate minerals 0.1-6%; the mass percentage of each raw material of the foam core layer is GPPS raw material 95-99%, antioxidant 0.3-0.6%, silicone diffusing agent 0.6-1%, foaming agent 0.5-2%, anti-UV agent 0.3-0.6%, toughening agent 0.5-2%, stabilizer 0.3-0.6%, nucleating agent 1-5%, and several holes are formed inside the foam core layer.

In some embodiments, the surface of the protective layer away from the foam core layer is provided with a texture to improve the refraction and reflection performance of light.

In some embodiments, a quantum dot layer is also arranged between the two protective layers, and the quantum dot layer covers the surface of the foam core layer.

In some embodiments, the mass percentage of each raw material of the quantum dot layer is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum dots 0.01-1%, and diameter of the quantum dots is in the range of 2-12 nm.

In some embodiments, the foam core layer further comprises quantum dots, the raw material mass percentage of the quantum dots is 0.01-1%, and diameter of the quantum dots is in the range of 2-12 nm.

In some embodiments, the composition of the foam core layer and the protective layer are both added with PS heat-resistant agent, and the mass percentage of the added PS heat-resistant agent is 0.1-3%.

In some embodiments, a method of manufacturing above foam diffuser plate is provided with following steps:
preparing two sets of raw materials of the same composition for the protective layer and one set of raw material for the foam core layer;
mixing the protective layer raw materials and the foam core layer raw materials evenly respectively;
adding the mixed raw material of the protective layer and mixed the raw material of the foam core layer into the screw extruder respectively for heating to form a molten state material; and
extruding the protective layer raw material and the foam core layer raw material through a die head of the screw extruder into a sheet-like manner, wherein the protective layer covers the surface of the foam core layer.

In some embodiments, the screw extruder includes a three-stage heating area, the temperature of the first stage of the heating is at 140-220°C, the temperature of the second stage of the heating is at 160-240°C, and the temperature of the third stage of the heating is at 180-260°C.

In some embodiments, the die head extrusion temperature is controlled at the range of 170-260°C.

In some embodiments, the screw extruder is provided with several feeding ports, which is able to be applied with a variety of different raw materials into the screw extruder.

In some embodiments, the beneficial effect of a foam diffuser plate is that the protective layers on the upper and lower surfaces of the foam core layer are made of PS raw material, and an inorganic diffusing agent is added to make the protective layer a hard protective layer so as to protect the foam core layer between the two protective layers and refract and reflect the light as well. In the foam core layer, by adding a foaming agent, several holes are formed inside the foam core layer, and there is an air medium inside the holes, so that when the light enters the foam core layer, it first passes through the base material of the foam core layer and then travels into the hole. It further refracts and reflects the light, so that the total light reflection of the foam core layer is higher, better uniformity, less irregularity and Mura effect is reduced. Furthermore, since there are holes inside the foam core layer, the density is reduced and the overall weight is also reduced, and the organosilicon diffusing agent achieves the diffusion effect, stabilizes the bubble size of the foaming agent through the nucleating agent, and prevents the yellowing of the foam core layer through the antioxidant.

The detailed features and advantages of the present invention will be described in detail in the following embodiments, and the content is sufficient to enable anyone familiar with the relevant art to understand the technical content of the present invention and implement it accordingly, and according to the content disclosed in this specification and the scope of patent application With the drawings, anyone who is familiar with the relevant art can easily understand the purpose and advantages of the present invention.

### BRIEF DESCRIPTION OF THE DRAWINGS

Figure 1 is a schematic structural diagram of a foam diffuser plate in accordance to some embodiments of the present invention;
Figure 2 is an electron microscope sectional view of a foam core layer of a foam diffuser plate in accordance to some embodiments of the present invention;
Figure 3 is an enlarged view of a foam diffuser plate in a plane lighting state in accordance to some embodiments of the present invention;
Figure 4 is a schematic structural diagram of a test backlight module in accordance to some embodiments of the present invention;
Figure 5 is a view of the uniform light effect of an ordinary diffuser plate arranged in front of the backlight in accordance to some embodiments of the present invention;
Figure 6 is a view of the uniform light effect of a foam diffuser plate arranged in front of the backlight in accordance to some embodiments of the present invention;
Figure 7 is a schematic structural diagram of a foam diffuser plate provided with a quantum dot layer in accordance to some embodiments of the present invention;
Figure 8 is a schematic structural diagram of the foam core layer of a foam diffuser plate containing quantum dots in accordance to some embodiments of the present invention; and
Figure 9 is a flow chart of a method for manufacturing a foam diffuser plate in accordance to some embodiments of the present invention.

### DESCRIPTION OF THE EMBODIMENTS

In order that the invention may be more fully understood, reference will now be made to the accompanying embodiments. This invention may, however, be embodied in many different forms and should not be construed as limited to the embodiments set forth herein. Rather, these embodiments are provided so that this disclosure will be thorough and complete.

Unless defined otherwise, all technical and scientific terms used herein have the same meaning as commonly understood by those skilled in the technical field of the present invention. The terms used in the specification of the present invention herein are only for the purpose of describing specific embodiments and are not intended to limit the present invention. The term "and/or" as used herein includes any and all combinations of one or more related listed items.

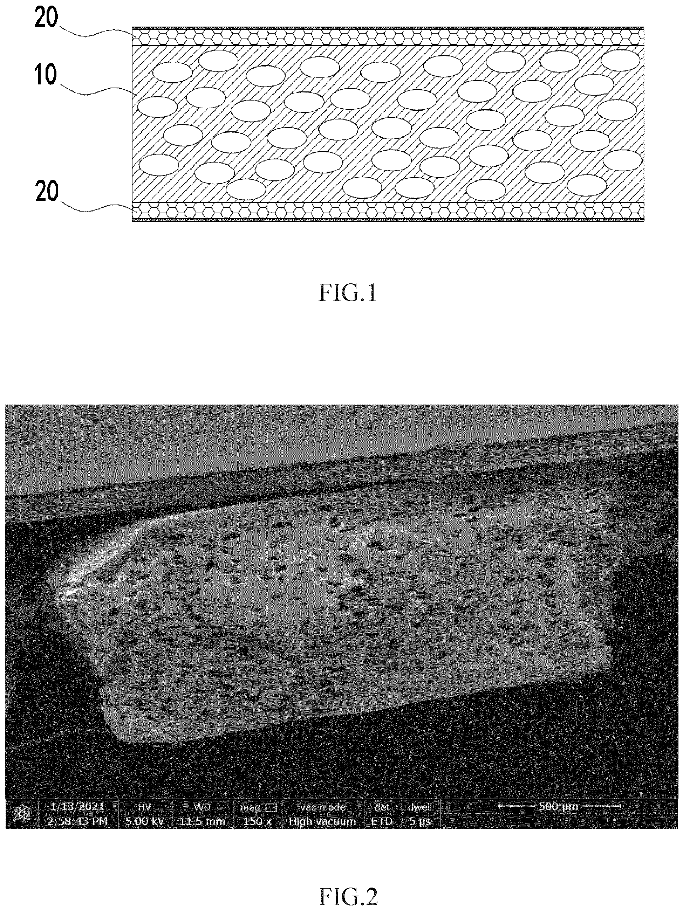

Please refer to FIG. 1, a foam diffuser plate, comprising a foam core layer 10, is provided. The upper surface and the lower surface of the foam core layer 10 are covered with a protective layer 20, and the foam core layer 10 and the protection layer 20 of the upper and lower surfaces has a thickness ratio of 1:7 to 9:1.

The mass percentage of each raw material of the protective layer 20 is PS raw material 90-99%, stabilizer 0.01-1%, organosilicon 0.1-3%, inorganic diffusing agent 0.1-3%, diffusing oil 0.1-3%, styrene-butadiene copolymer 0.1-2%, and magnesium silicate minerals 0.1-6%.

The mass percentage of each raw material of the foam core layer 10 is GPPS (General Purpose Polystyrene) raw material 95-99%, antioxidant 0.3-0.6%, silicone diffusing agent 0.6-1%, foaming agent 0.5-2%, anti-UV agent 0.3-0.6%, toughening agent 0.5-2%, stabilizer 0.3 -0.6%, and nucleating agent 1-5%. Several holes are formed inside the foam core layer 10.

The protective layer 20 on the upper and lower surfaces of the foam core layer 10 is made of PS raw material, and an inorganic diffusing agent is added to make the protective layer 20 as a hard protective layer 20. The foam core layer 10 is protected between the two protective layers 20, and is also able to refract and reflect light.

Please refer to FIG. 2 to FIG.3, in the foam core layer, by adding a foaming agent, several holes are formed inside the foam core layer 10, and there is an air medium inside the holes, so that when the light enters the foam core layer 10, it first passes through the base material of the foam core layer 10 and then travels into the hole. It further refracts and reflects the light under above constructions, so that the total light reflection of the foam core layer 10 is higher, better uniformity, less irregularity and Mura effect is reduced. Furthermore, since there are holes inside the foam core layer 10, the density is reduced and the overall weight is also reduced, and the organosilicon diffusing agent achieves the diffusion effect, stabilizes the hole size of the foaming agent through the nucleating agent, and prevents the yellowing of the foam core layer 10 through the antioxidant.

In some embodiments, the thickness ratio of the foam core layer 10 of the foam diffuser plate to the protective layer 20 on the upper and lower surfaces is 1:8:1; the mass percentage of each raw material of the protective layer 20 is PS raw material 93%, stabilizer 0.5%, organosilicon 1.5%, inorganic diffusing agent 1%, diffusing oil 1%, styrene-butadiene copolymer 1%, magnesium silicate mineral 2%; the mass percentage of each raw material for the foam core layer is GPPS raw material 95%, antioxidant 0.5%, silicone diffusing agent 0.8%, foaming agent 1%, anti-UV agent 0.5%, toughening agent 1%, stabilizer 0.2%, and nucleating agent 1%.

Ordinary diffuser has the thickness ratio of the protective layer to diffusion layer is 1:8:1, the mass percentage of each raw material of the protective layer 20 is PS raw material 93%, stabilizer 0.5%, organosilicon 1.5%, inorganic diffusing agent 1%, diffusing oil 1%, styrene-butadiene copolymer 1%, magnesium silicate mineral 2%; the mass percentage of each raw material for the diffusion layer is GPPS raw materials 97.8%, antioxidants 0.5%, anti-UV agent 0.5%, toughening agent 1%, and stabilizer 0.2%.

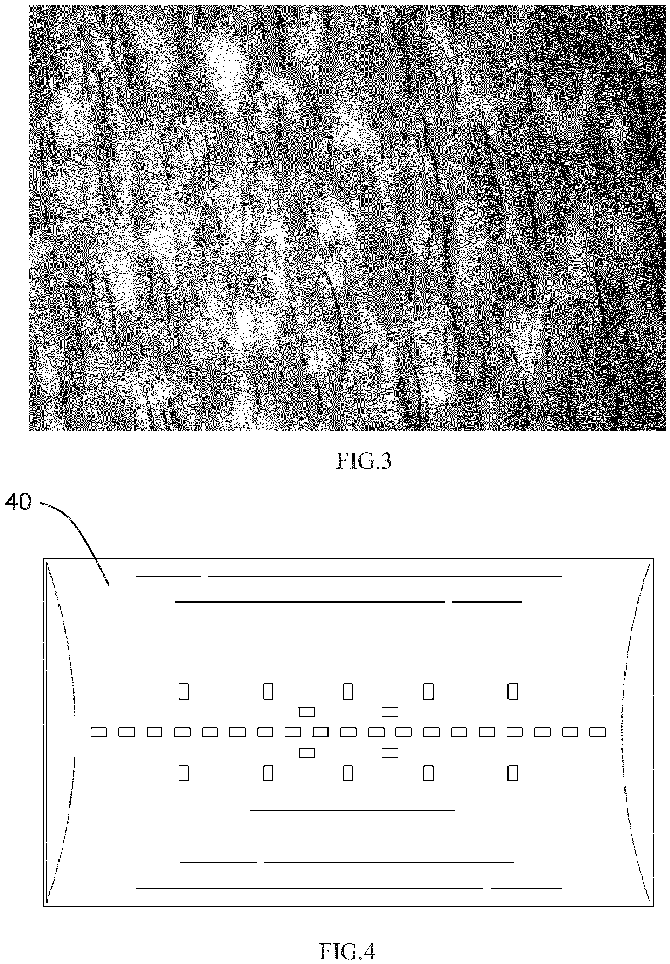

Assemble the produced foam diffuser plate and the ordinary diffuser plate correctly to the backlight, respectively. After checking, turn on the power switch, preheat for 30 minutes, and place the diffuser plate in the center above the backlight and in the fixed test area below the BEF, and measure luminance by using a calibrated luminance meter, where the backlight structure 40 can refer to FIG. 4.

The data of the foam diffuser plate and the ordinary diffuser plate are compared in Table 1 below.

| Type | Transmi ttance | X | Y | Center Brightness | Average Brightness | Uniform effect | Density |
|---|---|---|---|---|---|---|---|
| RS-40M ordinary diffuser plate | 41% | 0.2701 | 0.2401 | 501nit | 356nit | 64.5% | 1.04g/m m3 |
| RS-40M foam diffuser plate | 39.5% | 0.2704 | 0.2403 | 504nit | 361nit | 73.2% | 0.7-0.91 g/mm3 |

As can be comprehended from the above table, the brightness of the foam diffuser plate and the uniform light effect are also improved compared to the ordinary diffuser, and the density of the foam diffuser plate is smaller than the density of the ordinary diffuser, which further reduces the weight of the foam diffuser plate.

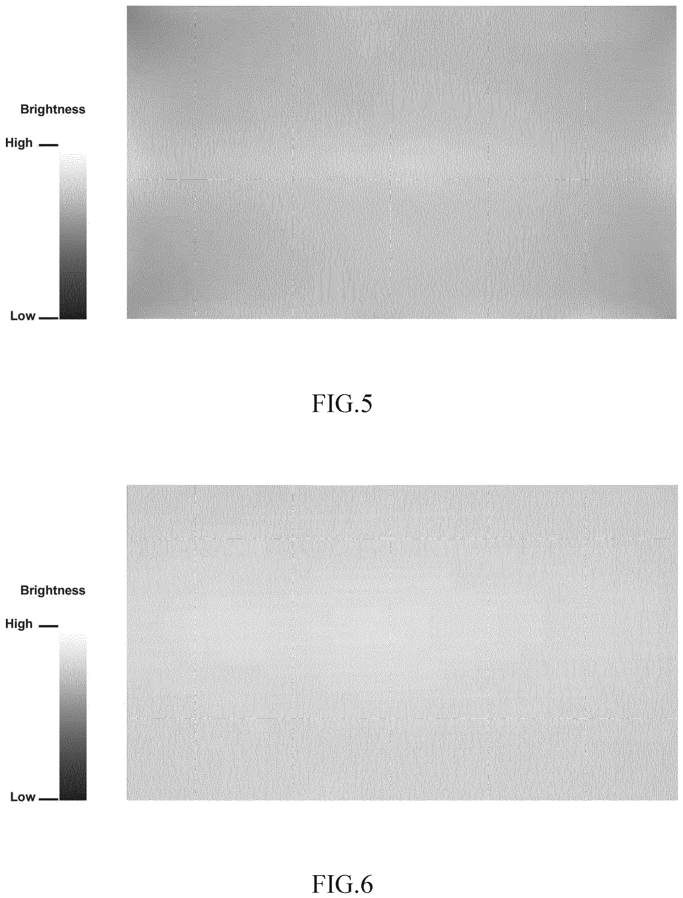

Please also refers to FIG.5 and FIG.6, in FIG. 5 shows the light diffusion effect when the ordinary diffuser is placed in front of the backlight. It can be clearly seen that the brightness in the middle of the ordinary diffuser is higher than the upper and lower sides. Comparing to FIG.5, FIG. 6 shows the uniform light diffusion effect when the foam diffuser plate is arranged in front of the backlight, it can be clearly seen that the light diffusion effect of FIG. 6 is better and uniform, and the brightness is also significantly improved.

In some embodiments, a surface of protective layer 20 away from the foam core layer 10 is provided with a texture to improve the refraction and reflection performance of light, so that the reflection and refraction of light could be more uniform.

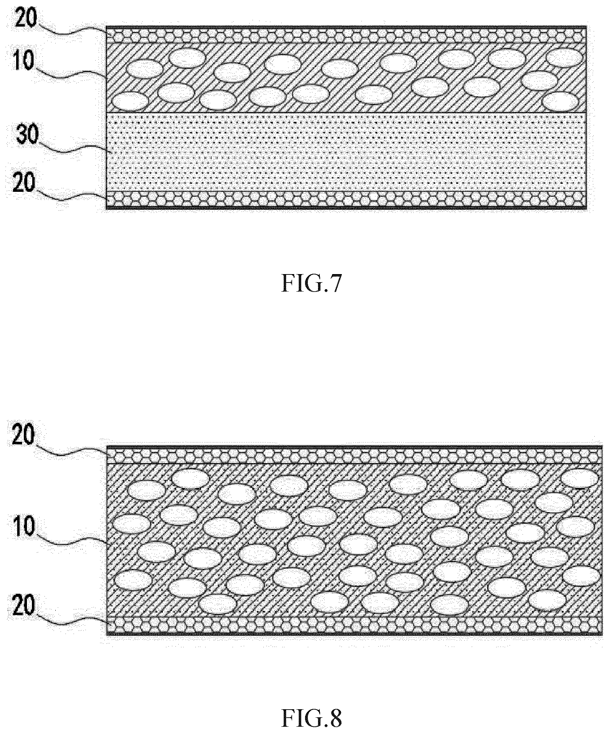

Please refer to FIG. 7, a quantum dot layer 30 is also provided between the two protective layers 20, and the quantum dot layer 30 covers the surface of the foam core layer 10. The mass percentage of each raw material of the quantum dot layer 30 is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum Dots 0.01-1%, and diameter of the quantum dots is in the range of 2-12 nm.

The quantum dot material has the characteristics of wide excitation spectrum, narrow emission spectrum, high color purity and good photostability, which can improve the optical performance of the diffuser plate. With combination of quantum dots and foam structure it can improve optical effect of the quantum dot layer 30. By converting the spectral band of the light in the original backlight through light conversion, on the one hand, the luminous peak width of the three primary colors can be reduced, and the display color gamut can be improved too. On the other hand, most importantly is that after light conversion, the utilization rate of the backlight passing through the color filter can be improved, thereby improving the brightness.

Please refer to FIG. 8, the foam core layer 10 further includes quantum dots, the raw material mass percentage of the quantum dots is 0.01-1%, and diameter of the quantum dots is in the range of 2-12 nm. Compared with the quantum dot layer 30 described above, in this embodiment, quantum dots are directly mixed into the raw material of the foam core layer 10, so that the quantum dots are directly embedded in the foam core layer 10, thereby reducing the overall thickness of the foam diffuser plate. The above-mentioned quantum dot layer 30 ensures that the foam core layer 10 is correspondingly covered with the quantum dot layer 30, both of which have their own advantages and could be processed by different processes according to actual conditions.

The composition of the foam core layer 10 and the protective layer 20 are all added with PS heat-resistant agent, and the mass percentage of the PS heat-resistant agent is 0.1-3%. The addition of PS heat-resistant agent can improve the heat-resistant performance of the foam diffuser plate, to avoid the deformation of the foam diffuser plate due to the high temperature of the LED light when it irradiates during use. The effect after adding PS heat-resistant agent can refer to the following table:

| Type | Transmitta nce | X | Y | Center Brightness | Average Brightness | Heat Tolerance |
|---|---|---|---|---|---|---|
| RS-50M | 40.40% | 0.2741 | 0.2451 | 240nit | 180nit | 71.3°C |
| RS-50Mwith PS heat - resistant agent | 40.10% | 0.2746 | 0.2453 | 241nit | 181nit | 76.3°C |

From the above table, it can be seen that after adding the PS heat-resistant agent, the temperature resistance of the foam diffuser plate is significantly improved compared to the foam diffuser plate without the PS heat-resistant agent.

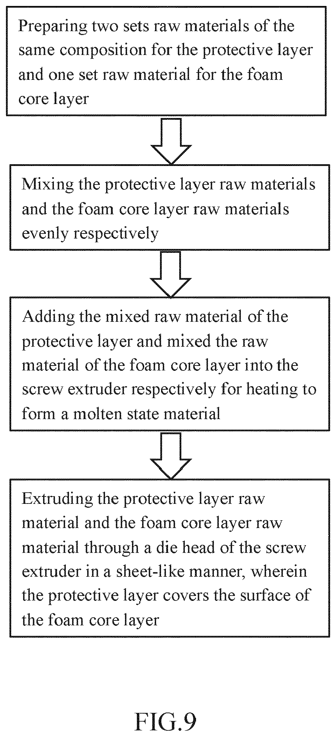

Please refers to FIG.9, a method of manufacturing above foam diffuser plate is provided with following steps:
a) Preparing two sets of raw materials of the same composition for the protective layer 20 and one set of raw material for the foam core layer 10;
b) Mixing the protective layer 20 raw materials and the foam core layer 10 raw materials evenly respectively;
c) Adding the mixed raw material of the protective layer 20 and mixed the raw material of the foam core layer 10 into the screw extruder respectively for heating to form a molten state material; and
d) Extruding the protective layer 20 raw material and the foam core layer 10 raw material through a die head of the screw extruder into a sheet-like manner, wherein the protective layer 20 covers the surface of the foam core layer 10.

Through the above-mentioned processing steps, the protective layer 20 and the foam core layer 10 are co-extruded to achieve adhesion and fixation. Moreover, it ensures that the protective layer 20 can cover the surface of the foam core layer 10, and the processing process is also more convenient.

In some embodiments, the screw extruder includes a three-stage heating area, the temperature of the first stage of the heating is at 140-220°C, the temperature of the second stage of the heating is at 160-240°C, and the temperature of the third stage of the heating is at 180-260°C. By adopting the method of segmented heating, the raw materials of the protective layer 20 and the foam core layer 10 can be fully heated and mixed to form into a molten state. The die head extrusion temperature is controlled at the range of 170-260°C, which ensuring that the protective layer 20 and the foam core layer 10 are still in a molten state during the extrusion process to keep the die head unobstructed.

The screw extruder is provided with several feeding ports, which is able to be applied with a variety of different raw materials into the screw extruder. Thereby, a variety of different raw materials could be added and extruded at the same time, so as to extrusion production of multi-layer boards. For the quantum dot layers 30 added as described above, the purpose of simultaneous extrusion can be achieved by simultaneously adding a group of raw materials for the quantum dot layers 30 to form a four-layers foam diffuser plate.

Through the abovementioned extrusion method, it can be distinguished from the traditional method of fixing with viscose, and is more convenient and faster. It makes the foaming agent generate gas during the heating process, so as to form a cavity in the foamed layer. Under above, the foam core layer 10 and the protective layer 20 can be produced in an integrated manner and reducing the manual combination process in the follow-up process. At the same time, it also avoids the aging of the viscose during long-term use and the problem that the adhesion and fixation between the layers cannot be achieved. The mentioned co-extrusion method can also accurately control the thickness between each layer and intelligent manufactured.

As can be understood from the above description, the present invention provides a foam diffuser plate and manufacturing method thereof. The protective layers 20 on the upper and lower surfaces of the foam core layer 10 are made of PS raw materials, and an inorganic diffusing agent is added to make a hard protective layer 20 so as to protect the foam core layer 10 between the two protective layers 20 and refract and reflect the light as well. In the foam core layer 10, by adding a foaming agent, several holes are formed inside the foam core layer, and there is an air medium inside the holes, so that when the light enters the foam core layer 10, it first passes through the base material of the foam core layer 10 and then travels into the hole. It further refracts and reflects the light, so that the total light reflection of the foam core layer 10 is higher, better uniformity, less irregularity and Mura effects is reduced. Furthermore, since there are holes inside the foam core layer 10, the density is reduced and the overall weight is also reduced, and the organosilicon diffusing agent achieves the diffusion effect, stabilizes the bubble size of the foaming agent through the nucleating agent, and prevents the yellowing of the foam core layer 10 through the antioxidant.

The above are the preferred embodiments of this application, and the scope of protection of this application is not limited accordingly. Therefore: all equivalent changes made in accordance with the structure, shape, and principle of this application shall be covered by the scope of protection of this application inside.

## Claims

1. A foam diffuser plate, comprising a foam core layer (10), an upper surface and a lower surface of the foam core layer (10) are covered with a protective layer (20), and a thickness ratio of the foam core layer (10) to the upper and lower surfaces of the protective layer (20) is 1:7-9:1; wherein a mass percentage of each raw material of the protective layer (20) is: PS raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate mineral 0.1-6%, and a mass percentage of each raw material of the foam core layer (10) is GPPS raw material 95-99%, antioxidant 0.3-0.6%, silicone diffusing agent 0.6-1%, foaming agent 0.5-2%, anti-UV agent 0.3-0.6%, toughening agent 0.5-2%, stabilizer 0.3-0.6%, nucleating agent 1-5%, and a plurality of holes is formed inside the foam core layer (10).

2. The foam diffuser plate of claim 1, wherein a surface of the protective layer (20) away from the foam core layer (10) is provided with a texture to improve the refraction and reflection performance of light.

3. The foam diffuser plate of claim 1, wherein a quantum dot layer (30) is arranged between the two protective layers (20), and the quantum dot layer (30) covers the surface of the foam core layer (10).

4. The foam diffuser plate of claim 3, wherein a mass percentage of each raw material of the quantum dot layer (30) is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate mineral 0.1-6%, quantum dots 0.01-1%, and diameter of the quantum dots is in the range of 2-12 nm.

5. The foam diffuser plate of claim 1, wherein the foam core layer (10) further comprises quantum dots, a raw material mass percentage of the quantum dots is 0.01-1%, and diameter of the quantum dots is in the range of 2-12 nm.

6. The foam diffuser plate of claim 1, wherein the composition of the foam core layer (10) and the protective layer (20) are both added with PS heat-resistant agent, and the mass percentage of the added PS heat-resistant agent is 0.1-3%.

7. The foam diffuser plate of claim 2, wherein the composition of the foam core layer (10) and the protective layer (20) are both added with PS heat-resistant agent, and the mass percentage of the added PS heat-resistant agent is 0.1-3%.

8. The foam diffuser plate of claim 3, wherein the composition of the foam core layer (10) and the protective layer (20) are both added with PS heat-resistant agent, and the mass percentage of the added PS heat-resistant agent is 0.1-3%.

9. The foam diffuser plate of claim 4, wherein the composition of the foam core layer (10) and the protective layer (20) are both added with PS heat-resistant agent, and the mass percentage of the added PS heat-resistant agent is 0.1-3%.

10. The foam diffuser plate of claim 5, wherein the composition of the foam core layer (10) and the protective layer (20) are both added with PS heat-resistant agent, and the mass percentage of the added PS heat-resistant agent is 0.1-3%.

11. A method for manufacturing the foam diffuser plate of claim 1, comprising the following steps: preparing two sets of raw materials of the same composition for the protective layer (20) and one set of raw material for the foam core layer (10);
mixing the protective layer (20) raw materials and the foam core layer (10) raw materials evenly respectively;
adding the mixed raw material of the protective layer (20) and mixed the raw material of the foam core layer (10) into the screw extruder respectively for heating to form a molten state material; and
extruding the protective layer (20) raw material and the foam core layer (10) raw material through a die head of the screw extruder into a sheet-like manner, wherein the protective layer (20) covers the surface of the foam core layer (10).

12. The method for manufacturing the foam diffuser plate of claim 11, wherein the screw extruder has a three-stage heating area, a temperature of a first stage of the heating is at 140-220°C, a temperature of a second stage of the heating is at 160-240°C, and a temperature of a third stage of the heating is at 180°C -260°C.

13. The method for manufacturing the foam diffuser plate of claim 11, wherein the die head extrusion temperature is controlled at the range of 170-260°C.

14. The method for manufacturing the foam diffuser plate of claim 11, wherein the screw extruder is provided with a plurality of feeding ports applied with a variety of different raw materials into the screw extruder.
